Europäisches Patentamt

European Patent Office

Office européen des brevets

(11) Numéro de publication : **0 005 103 B1**

# FASCICULE DE BREVET EUROPÉEN

(45) Date de publication du fascicule du brevet :
30.09.81

(21) Numéro de dépôt : 79400232.9

(22) Date de dépôt : 10.04.79

(51) Int. Cl.³ : **A 01 G 9/24, F 24 J 3/02, C 02 F 1/04**

(54) **Procédé de climatisation de serres à l'aide d'une eau non douce et de distillation de cette eau et installation en faisant application.**

(30) Priorité : 13.04.78 FR 7810910

(43) Date de publication de la demande :
31.10.79 (Bulletin 79/22)

(45) Mention de la délivrance du brevet :
30.09.81 Bulletin 81/39

(84) Etats contractants désignés :
**DE GB IT NL**

(56) Documents cités :
**DE - A - 1 632 943**
**FR - A - 1 168 575**
**FR - A - 2 345 068**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

**INSTITUT NATIONAL DE LA RECHERCHE AGRONO-MIQUE (INRA)**
**149, rue de Grenelle**
**F-75341 Paris Cedex 07 (FR)**

(72) Inventeur : **Balligand, Pierre**
**23, Avenue Luili**
**F-92330 Sceaux (FR)**
Inventeur : **de Cachard, Maurice**
**36 chemin de Malanot**
**F-38700 La Tronche (FR)**
Inventeur : **Denis, Pierre**
**4, Place Paul Mistral**
**F-38000 Grenoble (FR)**
Inventeur : **Gouzy, André**
**Chemin du Cerf Saint Nazaire les Eymes**
**F-38330 Saint Ismier (FR)**
Inventeur : **Gros D'Aillon, Luc**

**F-38330 St Ismier (FR)**
Inventeur : **Chlapale, Jean-Pierre**
**5, rue Bivouac Napoléon**
**F-06400 Cannes (FR)**
Inventeur : **Damagnez, Jacques**
**5, Allée des Mûriers La Chartreuse**
**F-30400 Villeneuve Les Avignon (FR)**

(74) Mandataire : **Mongrredien, André et al**
**c/o Brevatome 25, rue de Ponthieu**
**F-75008 Paris (FR)**

Imprimerie Jouve, 17, rue du Louvre, 75001 Paris, France

Procédé de climatisation de serres à l'aide d'une eau non douce et de distillation de cette eau et
installation en faisant application

La présente invention a pour objet un procédé de climatisation d'une serre à l'aide d'eaux non douces, le procédé permettant également d'obtenir une distillation d'au moins une partie de cette eau non douce, et une installation pour la mise en œuvre de ce procédé.

De façon plus précise, la présente invention concerne un procédé qui permet par la mise en circulation d'une eau non douce dans une serre pour la culture de plantes, de limiter l'insolation de jour et de réchauffer la serre de nuit tout en permettant de distiller une partie de l'eau non douce pour obtenir ainsi de l'eau douce. Cette distillation étant obtenue de nuit ou de jour et de nuit.

Par eau non douce, il faut entendre, d'une part, des eaux dites dures et, par exemple, de l'eau de mer, et d'autre part les eaux saumâtres. En d'autres termes, par eaux non douces il faut entendre toutes les eaux impropres à leur utilisation agricole ou à des fins d'irrigation.

De façon encore plus précise selon un premier mode de mise en œuvre, la présente invention permet, de jour, de filtrer le rayonnement solaire pour ne laisser passer vers les plantes à cultiver à l'intérieur de la serre que les longueurs d'ondes utiles au développement de ces plantes et de recueillir par une circulation d'eau non douce les calories absorbées par cette filtration, de restituer à la serre, de nuit, au moins une partie des calories stockées dans l'eau non douce tout en permettant la distillation d'au moins une partie de cette eau non douce en vue de recueillir cette eau distillée qui devient ainsi une eau douce.

Selon un deuxième mode de mise en œuvre plus élaboré, on obtient également une distillation de jour de l'eau non douce.

Dans le document DE-A- 1 632 943 on décrit un procédé d'exploitation de serres à partir de l'eau salée contenue dans un réservoir situé à l'intérieur de la serre. Cette eau est amenée à l'aide d'une pompe sur la surface de verre interne du double toit de la serre, pour s'écouler en film mince vers une gouttière collectrice qui la ramène dans le réservoir. De la vapeur d'eau se condense sur la face intérieure de la paroi externe de la serre, avant d'être collectée par un système de captage. S'il est envisagé de mélanger l'eau salée avec des colorants pour atténuer la lumière, la présence de ces colorants ne peut être comparée à l'adjonction d'éléments formant filtres optiques pour les longueurs d'ondes non utiles à la culture des plantes, en raison du caractère très imprécis du spectre d'absorption en fréquence de ces colorants. De plus, il n'est nullement envisagé dans ce document de stocker l'énergie calorifique de jour pour la restituer la nuit. Enfin, aucune disposition particulière n'est prise pour créer des zones froides de condensation et obtenir ainsi un rendement efficace de la production d'eau douce.

De façon comparable, le brevet français 1 168 575 décrit un dispositif pour la culture intensive dans des régions arides et ensoleillées, qui comprend une serre dans laquelle des bassins d'évaporation sont disposés au-dessus du sol. Sous l'effet du rayonnement solaire, une partie de l'eau contenue dans ces bassins s'évapore et se condense sur la face interne de la paroi de la serre et l'eau condensée est recueillie par des gouttières. Le rendement de ce dispositif reste ici aussi limité à la fois pour le chauffage et la condensation et pour la culture des plantes proprement dite. En effet, si les bassins d'évaporation permettent de former de l'ombre sur une partie de la zone de culture, aucun moyen n'est prévu pour réaliser un véritable filtrage optique du rayonnement solaire.

Une autre installation pour la culture intensive de végétaux est décrite dans le brevet français 2 345 068. Cette installation comprend une serre qui est munie d'une structure couvrante comportant des réflecteurs cylindroparaboliques dont les lignes de foyers coïncident avec un tube dans lequel on fait circuler un fluide. En cas d'ensoleillement, ces réflecteurs sont orientés automatiquement vers le soleil afin, d'une part, de protéger la surface cultivée et, d'autre part, de recueillir sous forme calorifuge l'énergie du rayonnement solaire. Comme dans les deux autres installations décrites, les réflecteurs orientables ne constituent pas des éléments de filtrage optique. De plus, il n'y a aucune circulation d'eau sur les réflecteurs, ni condensation de cette eau pour assurer la climatisation de la serre, puisque le fluide circule dans des conduites fermées.

On a aussi décrit dans la demande de brevet français publiée sous le numéro 2 271 763 et dans son premier certificat d'addition publié sous le numéro 2 304 278 un procédé et une installation de climatisation pour serres et abris. Une des variantes du procédé décrit et revendiqué dans ces demandes de brevet et de certificat d'addition consiste essentiellement à réaliser l'enceinte à l'aide d'une paroi double, une de ces parois constituant un filtre optique, à faire circuler entre ces deux parois de l'eau. Le filtre ne laisse passer que les longueurs d'ondes utiles pour la culture des plantes, le reste de l'énergie rayonnée est recueilli par l'eau qui retourne dans un réservoir de stockage des calories. De nuit, ces calories stockées sont remises en circulation dans l'enceinte pour obtenir un réchauffage de la serre.

Selon la présente invention, on obtient également une climatisation de la serre par stockage de calories de jour grâce à la circulation d'eau sur une paroi constituant un filtre optique et réchauffage de la serre de nuit par mise en circulation dans la serre de cette eau « chaude » stockée et escamotage éventuel du filtre optique. Mais selon le premier mode de mise en œuvre de la présente invention, ce réchauffage s'accompagne d'une distillation d'une partie de l'eau de réchauffage, cette distillation étant obtenue par condensation de vapeur d'eau sur la paroi interne de l'enceinte extérieure constituant la serre.

Un autre avantage de cette invention est qu'elle permet de fournir aux plantes l'eau douce qui est nécessaire à leur transpiration. Ces deux caractéristiques sont particulièrement avantageuses. D'une part elles limitent par l'effet de filtre la transpiration des cultures et, d'autre part, le dispositif est susceptible de fournir tout ou partie des quantités d'eau nécessaires à l'irrigation.

Pour ce qui est de la partie du premier mode de mise en œuvre du procédé qui permet d'obtenir par condensation de l'eau douce à partir de l'eau non douce, on peut indiquer que dans ce phénomène la source chaude est constituée par le réservoir de stockage de cette eau « chaude » alors que la source froide est constituée de la paroi qui prend une température d'équilibre relativement basse et qui est déterminée principalement par le rayonnement net de cette paroi et de son film d'eau vers le ciel durant la nuit.

L'invention concerne également une installation pour la climatisation d'une serre et pour la distillation de l'eau non douce servant à la climatisation et qui comporte essentiellement une enceinte externe dont au moins une partie est transparente vis-à-vis du rayonnement solaire, une surface constituée par des éléments de filtre optique constituant une couche parallèle à ladite paroi, une canalisation d'arrivée du liquide servant à amener à la partie supérieure de la couche de filtre de l'eau sous forme d'un mince film, des goulottes disposées entre la couche de filtres et l'enceinte extérieure pour récupérer l'eau échauffée après son ruissellement sur la couche de filtres et la ramener vers un réservoir de stockage des calories, des moyens par conduite pour prélever de nuit cette eau chaude et pour la faire circuler dans au moins un canal étanche situé au niveau du sol de la serre et des moyens pour récupérer l'eau condensée sur les parois pendant la nuit et la stocker dans un réservoir de stockage d'eau douce. Cette installation correspond au premier mode de mise en œuvre du procédé dans lequel seule une distillation de nuit est recherchée.

Selon d'autres caractéristiques de ce mode de réalisation de l'invention, la couche de filtres est constituée par un ensemble de plaques constituant des filtres optiques munis de mécanismes de pivotement, les plaques en position de fonctionnement se recouvrant partiellement mutuellement à la façon des tuiles d'un toit, ce qui permet d'escamoter les moyens de filtrage la nuit.

Selon une autre caractéristique de l'invention, les filtres optiques sur leurs faces tournées vers la paroi de la serre sont munis de filets de fil fin pour obtenir un film régulier d'eau de ruissellement sur l'ensemble des filtres optiques.

On comprend que selon ce mode de réalisation particulier de jour les filtres optiques sont en position de travail ou en position active et qu'ils constituent donc une paroi continue sensiblement parallèle à l'enceinte externe de la serre.

L'eau non douce, qui est par exemple de l'eau salée ou de l'eau saumâtre, est pulvérisée à la partie supérieure de cette couche de filtres optiques. Grâce aux dispositions indiquées ci-dessus, un film régulier d'eau coule sur l'ensemble des filtres optiques. La partie du rayonnement absorbée par le filtre optique et ne servant pas à la culture des plantes est évacuée par l'eau qui ruisselle en film régulier sur le filtre optique et est stockée dans un réservoir de « calories ». De nuit, les filtres thermiques, peuvent être escamotés et la régulation thermique, en l'espèce le réchauffage de la serre, est assurée par la circulation dans les canaux de l'eau « chaude » stockée dans le réservoir. Une partie de cette eau chaude non douce, du fait de sa température relativement chaude, se vaporise et se condense sur la face interne de la paroi externe de la serre. L'eau qui est venue se condenser sur cette face interne de la paroi externe ruisselle sur ces parois et est recueillie par un système de goulottes disposées aux extrémités inférieures de la paroi externe de la serre.

Selon un deuxième mode de mise en œuvre du procédé plus élaboré, on favorise une certaine condensation également de jour afin d'accroître la quantité d'eau douce obtenue.

En effet, il s'avère que si l'on veut garder dans la serre un rapport raisonnable entre la surface radiative de la serre et la surface cultivée dans la serre et si la déperdition thermique maximale de nuit est de 100 w/m², la production maximale théorique d'eau douce de nuit est de 1,67 litre par mètre carré de surface de serre. Cela est insuffisant, c'est pourquoi on favorise la condensation de jour et donc la distillation de jour.

Selon ce deuxième mode de mise en œuvre du procédé, de jour on crée à l'intérieur de la serre au moins une surface localisée froide par rapport au reste de la serre afin de provoquer sur cette ou ces surfaces une condensation de la fraction de la partie évaporable du liquide ayant circulé sur les moyens de filtrage et on recueille l'eau ainsi condensée dans ledit réservoir d'eau douce.

De préférence, de jour, on crée au moins une surface froide localisée en faisant passer l'eau non douce dans au moins un condenseur avant de la faire passer sur lesdits moyens de filtrage.

Le dispositif pour la mise en œuvre de cette variante du procédé se caractérise en ce que les moyens pour faire circuler de jour l'eau sur les moyens de filtrage comportent au moins un condenseur et des moyens pour recueillir de jour l'eau condensée sur le ou lesdits condenseurs.

De préférence, les moyens pour faire circuler de jour de l'eau sur les moyens de filtrage comprennent après le ou lesdits condenseurs une canalisation disposée au-dessus des moyens de filtrage, et munie de trous, ladite canalisation ayant en section droite une forme telle qu'elle constitue une surface de condensation et des moyens pour recueillir l'eau ainsi condensée.

De toutes façons l'invention sera mieux comprise à la lecture de la description qui suit d'un mode de réalisation de l'invention donné à titre d'exemple non limitatif. La description se réfère aux figures annexées sur lesquelles on a représenté :

— sur la figure 1, une vue schématique d'une partie de la serre montrant l'installation pour la mise en œuvre du procédé,

— sur la figure 2, une vue plus détaillée de cette serre montrant la moitié de la serre avec les filtres optiques en position de travail et une autre moitié avec les filtres optiques en position escamotée,

— sur la figure 3, un exemple de réalisation du mouvement de pivotement des éléments de filtres optiques formant tuiles montrant également le filet permettant d'obtenir un bon écoulement de l'eau de ruissellement,

— sur la figure 4, une vue schématique d'une partie de la serre montrant une installation pour la mise en œuvre de la variante du procédé selon laquelle on distille de jour, et

— sur la figure 5, une vue de détail en coupe transversale de la canalisation d'amenée de l'eau sur les éléments filtrants.

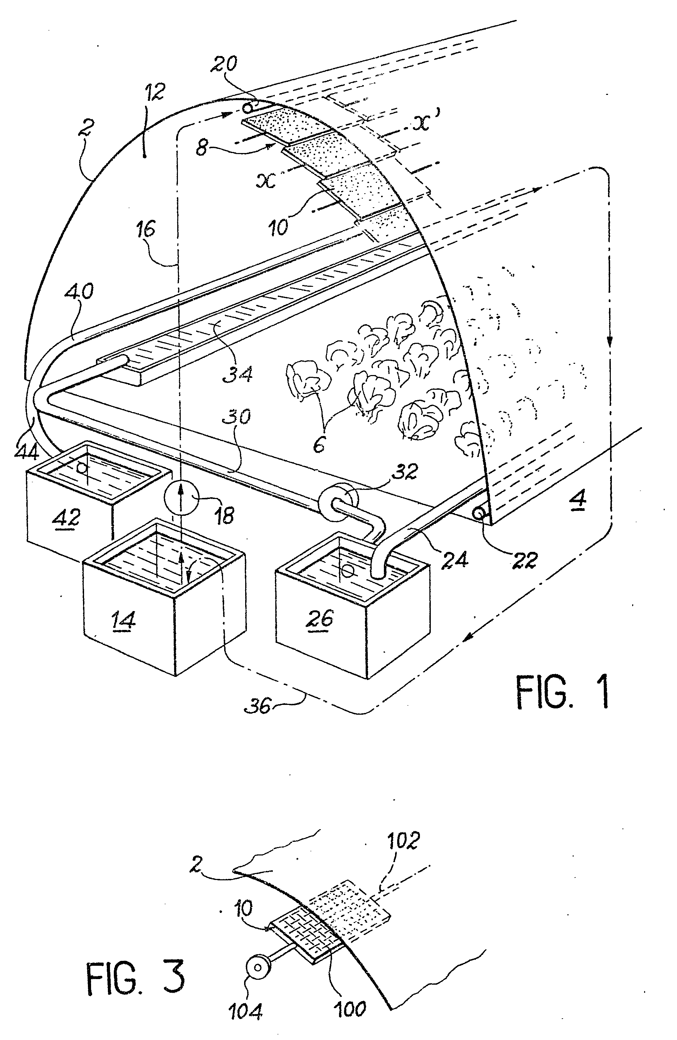

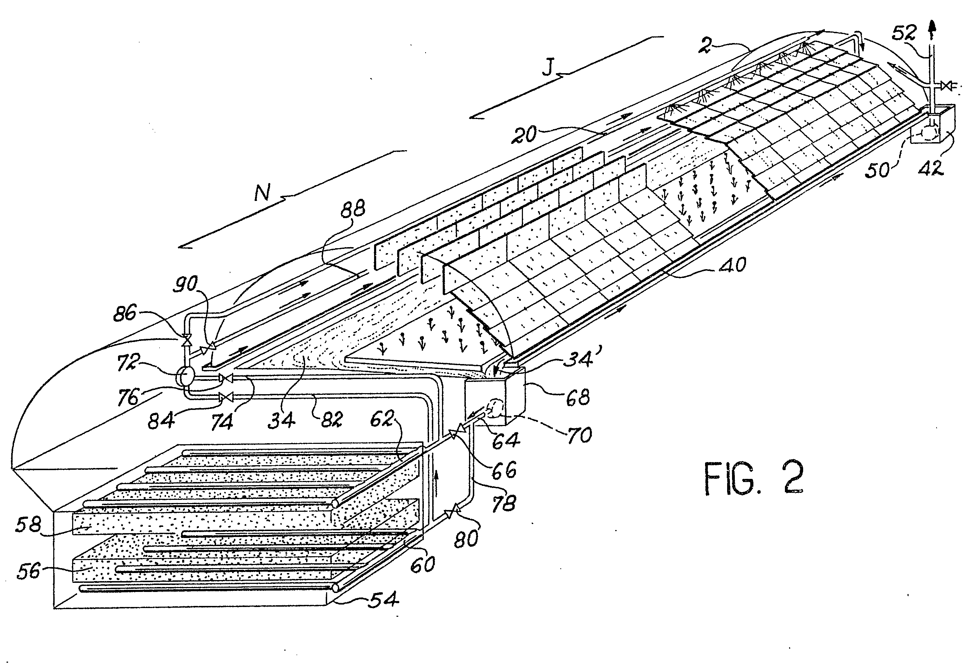

La figure 1 représente de façon volontairement très simplifiée l'installation de climatisation et de distillation afin de mieux faire comprendre le procédé de l'invention. On décrira en liaison avec la figure 2 un mode de réalisation plus détaillé de l'invention.

L'invention comporte en fait une serre pour la culture de plantes ayant une structure particulière, et un ensemble de conduites et de réservoirs de stockage pour la climatisation de la serre de jour et de nuit et pour recueillir l'eau douce condensée.

La serre comporte une paroi extérieure 2 ayant par exemple une forme hémicylindrique, les bords de cette enceinte étant fixés sur le sol 4. Sur le sol inclus dans l'enceinte 2 ou du moins sur une partie de ce sol, on a représenté les plantes 6 qui y sont cultivées.

La paroi extérieure 2 est « doublée » intérieurement par une couche 8 d'éléments de filtre optique 10, qui constitue une surface continue faisant face à la paroi extérieure 2 et limitant avec celle-ci un espace 12. Ces éléments de filtre optique se recouvrent partiellement mutuellement à la façon des tuiles d'un toit. En réalité, ces éléments ou du moins certains peuvent pivoter autour d'axes longitudinaux horizontaux X-X'. Ainsi chaque élément 10 peut occuper une position active qui est celle qui est représentée sur la figure 1, et une position inactive selon laquelle les éléments sont sensiblement orthogonaux à la paroi extérieure 2. Dans cette deuxième position, les éléments ne sont plus interposés sur le chemin du rayonnement terrestre.

Comme cela a déjà été succinctement expliqué, ces éléments de filtre optique ont pour but de ne laisser passer que les longueurs d'ondes utiles pour la culture des plantes. Plus précisément ces filtres doivent absorber les rayonnements dont les longueurs d'ondes sont supérieures à 0,7 ou 0,75 μm.

La paroi extérieure peut être avantageusement réalisée à l'aide d'une feuille en matière plastique transparente aux rayonnements dans le proche ultraviolet dans le visible et dans l'infrarouge jusqu'à 40 ou 50 μm au moins, cette feuille étant bien sûr étanche.

L'installation comprend également un premier réservoir de stockage 14 pour de l'eau « froide » non douce, cet adjectif ayant le sens défini précédemment. Ce réservoir 14 est relié par une canalisation 16 munie d'une pompe 18 et d'une vanne à une conduite d'aspersion 20 disposée longitudinalement au faîte de la serre dans l'espace 12. Cette conduite, pourvue d'ajutages calibrés permet de créer, lorsque les éléments 10 sont en position active, un film régulier d'eau s'écoulant sur la totalité de la couche 8 grâce à des dispositions particulières qui seront décrites ultérieurement. Ce film liquide absorbe les calories ou une partie des calories correspondant à la bande non passante du filtre. A l'extrémité inférieure de la couche de filtres optiques on obtient donc de l'eau non douce « chaude ». Cette eau est recueillie par des goulottes telles que 22. Des canalisations telles que 4 ramènent cette eau « chaude » dans un réservoir de stockage 26 pour l'eau « chaude » non douce.

C'est ce cycle qui est décrit pendant le jour, c'est-à-dire pendant la période de rayonnement solaire durant laquelle il faut protéger les plantes contre ce rayonnement.

De nuit ce cycle est arrêté et on met en route un circuit de réchauffage de la serre et de distillation. Ce circuit comprend une conduite 30 munie d'une pompe 32 et d'une vanne, qui peut relier le réservoir 26 de l'eau non douce chaude à un canal ouvert 34 à parois étanches, disposé sur le sol à l'intérieur de la serre, c'est-à-dire à l'intérieur de l'enceinte 2, là où il n'y a pas de plantes à cultiver.

Après sa circulation dans le canal 34, l'eau ou la partie de l'eau non évaporée est renvoyée par la canalisation 36 vers le réservoir d'eau froide non douce 14.

Le fonctionnement de l'installation est le suivant :

De jour, de l'eau froide est prélevée dans le réservoir 14 par la pompe 18 et ruisselle de façon continue sur la couche de filtres optiques 10 sur laquelle elle circule par simple gravité. Cette eau s'échauffe au contact de ces filtres qui absorbent l'énergie des rayonnements dont la longueur d'onde n'est pas utile à la culture des plantes. Dans les goulottes 22 on recueille donc de l''eau « chaude » et la serre est maintenue à une température convenable. Elle est ensuite conduite jusque dans le réservoir de stockage 26.

Un débit d'eau dans ce circuit de l'ordre de 50 l/heure et par mètre carré de filtre optique permet de limiter l'échauffement entre l'entrée et la sortie à environ 10 °C.

De nuit, ce premier circuit est interrompu. Par la pompe 32 et la canalisation 30 on fait circuler de l'eau non douce et « chaude » dans le canal 34. Une partie de cette eau se vaporise dans la serre. Elle sert à échauffer la serre. La partie de l'eau non évaporée est ramenée vers le réservoir de stockage 14 par la conduite 36. En outre, on fait pivoter les éléments 10 de filtre optique dans la position inactive de façon à ne pas former un écran pour le rayonnement terrestre nocturne.

L'eau vaporisée dans la serre vient se condenser sur la face interne de l'enceinte externe 2 de la serre. En effet, cette enceinte, du fait de sa température radiative nocturne relativement basse, joue le rôle de source froide. Cette eau de condensation ruisselle le long de cette paroi et elle est recueillie par des goulottes 40 raccordées à un réservoir 42 de stockage d'eau douce par la canalisation 44.

Sur la figure 2, on a représenté un mode plus détaillé de réalisation de l'installation objet de l'invention. Sur cette figure, la moitié de gauche référencée N correspond à l'état de la serre pour le fonctionnement de nuit, la moitié de droite référencée J correspondant à l'état de la serre pour le fonctionnement de jour.

On retrouve bien sûr la paroi extérieure 2 en vue fantôme pour rendre la figure plus lisible. Cette enceinte repose sur le sol et comporte une région sur laquelle on cultive les plantes. On retrouve également la couche de filtres optiques constituée par des éléments pivotants de filtre optique limitant un espace entre ceux-ci et la paroi extérieure. La canalisation 20 sert à la création du film liquide sur la couche de filtres optiques et les goulottes telles que 40 recueillent l'eau douce condensée pour l'acheminer vers le réservoir 42 de stockage d'eau douce. Une pompe 50 permet d'envoyer cette eau douce dans une canalisation 52 d'utilisation ou de stockage. On retrouve également les canaux ouverts 34 et 34' dans lesquels circule de nuit l'eau non douce « chaude ».

Les modifications par rapport au mode de réalisation de la figure 1 consistent essentiellement dans le fait que les deux réservoirs de stockage pour l'eau non douce 14 et 26 de la figure 1 sont rassemblés en une même piscine de stockage 54 et en ce que le nombre de canalisations de liaison est réduit par utilisation de vannes.

Dans le mode de réalisation simplifié de la figure 1, il est prévu un réservoir 14 pour l'eau « non douce » froide et un réservoir 26 pour l'eau non douce « chaude ». Toutefois, on remarque que lorsqu'un réservoir se vide l'autre se remplit. C'est pourquoi on les a remplacés par une piscine unique dans laquelle on réalise une stratification des couches d'eau froide (au fond) et chaude (au-dessus). Dans ce but on utilise des stratificateurs référencés 56 et 58. Ils sont constitués par des films plastiques tendus horizontalement à différents niveaux et perforés. On freine ainsi les mouvements d'eau dans le sens vertical, en les contraignant à se répartir sur la totalité de la surface de la piscine 54, tout en laissant libres les mouvements horizontaux.

Pour compléter cet effet de stratification, l'arrivée et l'évacuation d'eau « froide » se font par des drains 60 disposés au fond de la piscine. De même, l'arrivée et l'évacuation de l'eau « chaude » se font par des drains 62 disposés à la partie supérieure de la piscine. Bien entendu, ces drains sont solidaires d'une structure flottante.

Les drains 62 sont réunis par une canalisation 64 par l'intermédiaire de la vanne 66 au puisard 68 de reprise des eaux des canaux 34 et 34' équipé d'une pompe 70. Ils sont également reliés à une pompe 72 par la conduite 74 munie d'une vanne 76. De même, les drains 60 sont reliés à la pompe 70 par la conduite 78 munie de la vanne 80 et à la pompe 72 par la conduite 82 munie de la vanne 84. La sortie de la pompe 72 est raccordée d'une part à la conduite 20 qui sert à créer le film liquide, munie de la vanne 86 et d'autre part, à la conduite 88 (munie de la vanne 90) qui sert à l'alimentation des canaux 34 et 34'.

De jour, les vannes 80, 76 et 90 sont fermées et l'on retrouve le fonctionnement décrit en liaison avec la figure 1. De nuit, les vannes 66, 86 et 84 sont fermées et l'on retrouve également le mode de fonctionnement décrit à propos de la figure 1.

Sur la figure 3, on a représenté schématiquement un élément 10 de filtre optique. Comme on l'a déjà indiqué, la face supérieure (tournée vers la paroi extérieure 2) est munie d'un filet 100 servant à régulariser le film liquide s'écoulant sur l'ensemble de la couche de filtres optiques. Ce filet est réalisé avec un fil fin et a de grandes mailles (de l'ordre du centimètre). Les éléments d'une même rangée sont fixés sur un axe de pivotement commun 102 muni à une de ses extrémités d'un dispositif de mise en rotation schématisé par la référence 104. Bien entendu, ce filet pourrait être constitué simplement par un relief prévu sur la surface des éléments de filtre optique tournée vers la paroi extérieure.

L'écoulement d'un film mince sur une surface lisse est instable car son débit est fonction sensiblement du cube de son épaisseur. La moindre salissure ou le moindre défaut de mouillage provoque un amincissement local du film qui freine considérablement le débit dans cette zone en suralimentant les filets voisins dont l'épaisseur augmente, accroissant considérablement leur débit et facilitant l'assèchement de la zone initiale.

Le rôle joué par le filet est double :
— il freine la vitesse d'écoulement du film grâce à l'effet de rugosité qu'il engendre et permet d'éliminer la loi de croissance du débit local en fonction du cube de l'épaisseur,
— grâce au phénomène de tension superficielle, il permet de stabiliser les interfaces eau-air, dès que leurs rayons de courbure, liés au pas des mailles, sont suffisamment faibles.

Selon une variante de réalisation de l'invention, les éléments 10 de filtres optiques peuvent être fixes. Dans ce cas, les caractéristiques optiques de filtrage de ces éléments doivent être les suivantes :
— transparent aux rayonnements de 0,35 à 0,7 ou 0,8 μ ;
— opaque de 0,7 à 0,8 à 4 ou 5 μ ;

— transparent de 4 à 5 μ jusqu'à 30 ou 50 μ.

Dans ce cas, la condensation ne se produit bien sûr plus sur la paroi extérieure 2.

Dans la description précédente, la distillation se produit dans la partie de la serre où l'on cultive les plantes. Dans certains cas il peut être avantageux de provoquer la condensation de l'eau non douce « chaude » dans une autre partie de la serre, mais on comprend bien que cela ne change en rien le procédé et l'installation de climatisation de la serre.

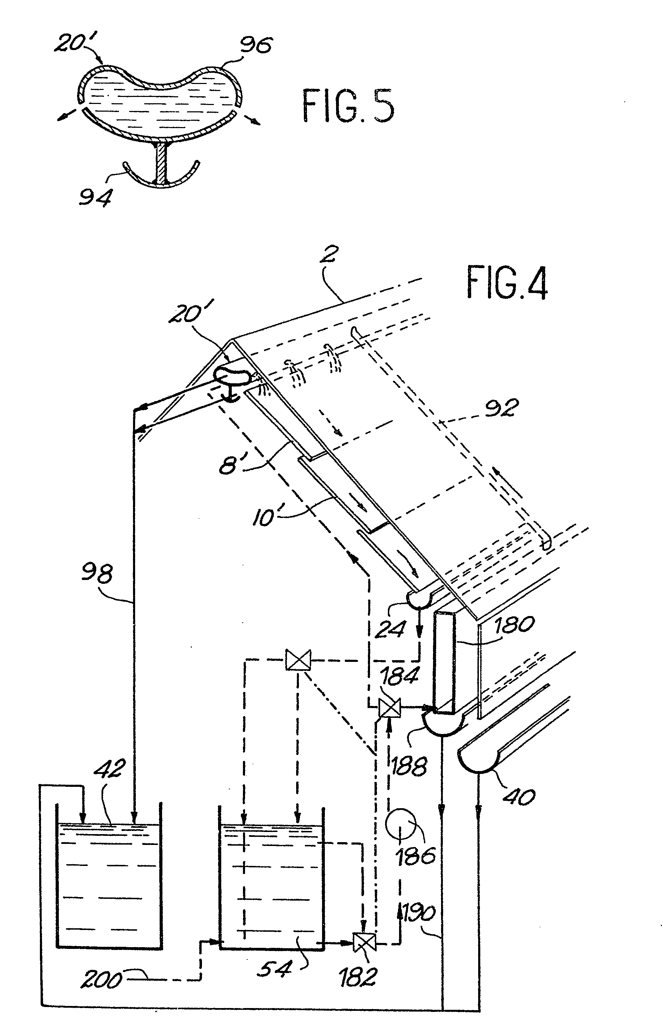

Sur les figures 4 et 5, on a représenté la variante de réalisation de l'installation selon laquelle on produit une condensation de l'eau également de jour. Sur cette figure, on a uniquement représenté les circuits concernant la circulation de l'eau de jour, puisque par ailleurs la circulation de nuit est identique à celle qui est définie et représentée en liaison avec les figures 1 et 2. Par ailleurs, sur cette figure 4, on a repris les mêmes références pour désigner les éléments appartenant déjà au mode de réalisation selon les figures 1 et 2.

A l'intérieur de l'enceinte délimitée par la paroi extérieure 2, on trouve une couche 8' d'éléments de filtres optiques 10' qui sont identiques aux éléments de filtres 10 de la figure 1 à la seule différence qu'ils ne soient pas montés pivotants et qu'ils constituent ainsi une couche fixe continue. En variante, les éléments de filtre optique peuvent être montés pivotants comme cela a été représenté sur la figure 1, en liaison avec le premier mode de mise en œuvre du procédé. On retrouve également le réservoir de stockage d'eau douce 42 et le réservoir 54 de stockage d'eau saumâtre de la figure 2 dont la partie supérieure constitue une zone de stockage de l'eau saumâtre chaude et la partie inférieure une zone de stockage de l'eau saumâtre froide. A l'intérieur de la paroi extérieure 2, on trouve au moins un condenseur 180 qui, comme on l'a déjà expliqué, joue le rôle de surface froide de jour par rapport au reste de l'enceinte. La région froide du réservoir de stockage 54 est reliée au condenseur 180 par l'intermédiaire d'une conduite comportant notamment les vannes à trois voies 182 et 184 et la pompe 186. En dessous du condenseur 180, on trouve une goulotte 188 pour recueillir l'eau de condensation douce, cette goulotte 188 étant réunie au réservoir de stockage d'eau douce 42 par la conduite 190. Comme sur la figure 1, on retrouve la goulotte 40 correspondant à la récupération de l'eau douce s'étant condensée de nuit par les moyens déjà décrits, cette goulotte étant bien sûr raccordée également au réservoir de stockage 42 d'eau douce.

La sortie du condenseur 180 est raccordée par la canalisation 92 à la conduite 20' qui joue exactement le même rôle que la conduite 20 des figures 1 et 2. C'est-à-dire que cette conduite est munie d'orifices pour créer sur la couche de filtres optiques 8' une nappe continue d'eau saumâtre. Cependant, dans ce mode de réalisation, et comme on le voit sur la figure 5, la conduite 20' a en section droite, une forme particulière qui permet d'en accroître la surface extérieure. Par exemple, sur la figure 5, cette conduite a, en section droite, une forme de haricot. On comprend que la surface de la conduite 20' constitue de jour une surface froide par rapport à l'ensemble de la serre puisqu'elle est alimentée par une eau saumâtre froide. En dessous de la conduite 20', on trouve une goulotte suspendue 94 qui peut recueillir l'eau de condensation sur les faces intérieures de la conduite 20'. La surface supérieure de la conduite 20' constitue également une goulotte 96 qui recueille ainsi l'eau de condensation sur la face supérieure externe de la conduite 20'. La goulotte 94 et la goulotte 96 sont raccordées par la conduite 98 au réservoir de stockage d'eau douce 42.

Lors du fonctionnement de jour, pour produire une certaine condensation, la vanne à trois voies 182 est placée dans une position telle que la partie inférieure du réservoir de stockage 54 soit raccordée à la pompe 186. De même, la sortie de la pompe 186 est raccordée par la vanne à trois voies 184 au condenseur 180. Dans cette position des vannes, on comprend que de jour l'eau saumâtre froide traverse le condenseur 180 et circule dans la conduite 20'. Elle s'écoule en une nappe régulière sur les éléments de filtres optiques 8' où elle se vaporise partiellement. La fraction non vaporisée est recueillie par la goulotte 24 et cette eau saumâtre chaude est acheminée vers la partie supérieure du réservoir de stockage 54. Quant à la fraction qui s'est vaporisée, elle vient se condenser d'une part sur les parois externes du condenseur 180 et, d'autre part, sur les parois externes de la conduite à section particulière 20'. Grâce aux goulottes 188, 94 et 96, l'eau douce ainsi recueillie est acheminée vers le réservoir 42. De nuit, les vannes 182 et 184 sont mises dans des positions telles que, d'une part, la partie supérieure du réservoir de stockage 54 soit raccordée directement à la conduite 20' et que, d'autre part, la goulotte 24 soit raccordée à la partie inférieure du réservoir de stockage 54.

L'eau saumâtre, au fur et à mesure de son épuisement, est remplacée par une canalisation d'alimentation 200 débouchant au fond du réservoir de stockage 54. De temps en temps, celui-ci doit être purgé de l'excès de sels qu'il contient.

Grâce à cette disposition particulière de l'installation, on obtient ainsi une production d'eau douce complémentaire de jour qui vient compléter la production d'eau douce déjà obtenue durant la nuit.

Il faut noter que dans ce mode perfectionné de mise en œuvre du procédé, on peut utiliser pour la distillation de nuit le circuit représenté sur la figure 4 et qui servait à la distillation de jour. Cela a comme principaux avantages d'accroître la surface d'évaporation de nuit et surtout de supprimer les canaux 34 de la figure 2. Ainsi, pour une serre de même dimension, on augmente substantiellement la surface du sol utilisable pour les cultures.

Dans ce deuxième mode de réalisation de l'installation pour la mise en œuvre perfectionnée du procédé de nuit, l'eau chaude non douce suit exactement le même circuit que l'eau froide non douce de jour. Elle est prélevée à la partie supérieure du réservoir 54, elle ne passe pas par le condenseur 180. Elle arrive dans la conduite 20' d'où elle s'écoule en film mince sur les éléments de filtre optique 10' qui sont bien sûr maintenus en position rabattue pour assurer la continuité de l'écoulement. Une partie de cette eau chaude se vaporise dans la serre. L'eau vaporisée vient se condenser essentiellement sur la face interne de la paroi extérieure 2 par le processus déjà expliqué en liaison avec la figure 1. L'eau douce condensée est recueillie par la goulotte 40 pour être dirigée vers le réservoir 42.

## Revendications

1. Procédé de climatisation d'une serre de jour et de nuit par de l'eau non douce et de distillation de cette eau non douce pour obtenir de l'eau douce, ladite serre servant à la culture de plantes (6) pour lesquelles seules certaines longueurs d'onde du rayonnement solaire sont utiles, caractérisé en ce que : de jour, on interpose entre le rayonnement et les plantes des moyens de filtrage optique (10, 10') des longueurs d'onde non utiles auxdites plantes et en ce qu'on fait circuler de l'eau non douce sur lesdits moyens de filtrage optique en un film régulier afin de recueillir l'énergie calorifique absorbée par lesdits moyens de filtrage optique, et on stocke cette eau « chaude » ; de nuit, on fait circuler au moins une partie de l'eau chaude stockée à l'intérieur de la serre, cette eau se vaporisant partiellement à l'intérieur de la serre et échauffant celle-ci, l'eau vaporisée venant se condenser sur une paroi (2) dans ladite serre et on recueille dans un réservoir (42) d'eau douce au moins une partie de l'eau condensée.

2. Procédé selon la revendication 1, caractérisé en ce que de nuit, on escamote les moyens de filtrage optique (10).

3. Procédé selon la revendication 1, caractérisé en ce que de jour on crée à l'intérieur de la serre au moins une surface localisée (20', 180) froide par rapport au reste de la serre, afin de provoquer sur cette ou ces surfaces une condensation de la fraction de la partie évaporable du liquide ayant circulé sur les moyens de filtrage optique (10') et en ce qu'on recueille l'eau ainsi condensée dans ledit réservoir d'eau douce (42).

4. Procédé selon la revendication 3, caractérisé en ce que, de jour, on crée au moins une surface froide localisée en faisant passer l'eau non douce dans au moins un condenseur (20') avant de la faire passer sur lesdits moyens de filtrage optique (10').

5. Installation pour la mise en œuvre du procédé selon l'une des revendications 1 à 4 pour la climatisation d'une serre de jour et de nuit par de l'eau non douce et de distillation de cette eau pour obtenir de l'eau douce, ladite serre étant limitée par une paroi extérieure (2) et servant à la culture de plantes (6) pour lesquelles seules certaines longueurs d'onde du rayonnement solaire sont utiles, caractérisée en ce qu'elle comprend :

— des moyens de filtrage optique (10, 10') aptes à absorber les longueurs d'ondes non utiles, pouvant être interposés entre lesdites plantes et le rayonnement solaire ;

— des moyens (18, 72, 186) pour faire circuler de jour un film régulier d'eau douce sur lesdits moyens de filtrage optique afin de recueillir l'énergie calorifique absorbée et des moyens (26, 54) pour stocker cette eau « chaude » ;

— des moyens (32, 72, 186) pour faire circuler de nuit dans ladite enceinte au moins une partie de cette eau « chaude », une partie de cette eau en circulation se condensant sur une paroi (2) dans ladite serre, des moyens (14, 54) pour stocker l'eau refroidie par sa circulation dans ladite serre, et des moyens (42) pour recueillir l'eau douce qui s'est condensée et pour la stocker.

6. Installation selon la revendication 5, caractérisée en ce que les moyens pour faire circuler de jour l'eau sur les moyens de filtrage optique comportent au moins un condenseur (20', 180) et en ce qu'il comprend des moyens (94, 96, 188) pour recueillir de jour l'eau condensée sur le ou lesdits condenseurs.

7. Installation selon la revendication 6, caractérisée en ce que les moyens pour faire circuler de jour de l'eau sur les moyens de filtrage optique comprennent après le ou lesdits condenP-seurs (180) une canalisation disposée au-dessus des moyens de filtrage optique (10') et munie d'ajutages, ladite canalisation ayant en section droite une forme telle qu'elle constitue une surface de condensation (20') et les moyens (94, 96) pour recueillir l'eau ainsi condensée.

8. Installation selon l'une quelconque des revendications 6 et 7, caractérisée en ce que les moyens pour recueillir de jour l'eau condensée consistent en une goulotte (94) fixée au-dessous de ladite canalisation.

9. Installation selon la revendication 5, caractérisée en ce que des moyens (102, 104) sont prévus pour escamoter lesdits moyens de filtrage optique (10).

10. Installation selon la revendication 9, caractérisée en ce que les moyens de filtrage optique consistent en une pluralité d'éléments de filtre optique (10) pouvant pivoter autour d'un axe (X-X') pour prendre une position active de jour et une position inactive de nuit, dans la position active les éléments de filtre optique formant une couche continue (8) sensiblement parallèle à la paroi extérieure (2) et se recouvrant mutuellement partiellement.

11. Installation selon l'une quelconque des revendications 5 à 10, caractérisée en ce que chaque élément de filtre optique (10) comporte sur sa face tournée vers la paroi extérieure (2) un filet (100) en fil fin ou un relief sur la paroi extérieure dudit élément.

12. Installation selon la revendication 5, caractérisée en ce que les moyens pour faire circuler de nuit l'eau « chaude » non douce consistent en des canaux ouverts (34) ménagés dans le sol.

13. Installation selon la revendication 7, caractérisée en ce que les moyens (54) pour faire circuler la nuit l'eau « chaude » non douce sont identiques aux moyens pour faire circuler de jour l'eau « froide » non douce, mais munis de moyens (182, 184) pour empêcher l'eau « chaude » de passer par le condenseur (180).

**Claims**

1. Process for air-conditioning a greenhouse by day and night by non-fresh water and of distilling this non-fresh water to provide fresh water, said greenhouse serving for the cultivation of plants (6) for which only certain wavelengths of solar radiation are useful, characterized in that, by day optical filter means (10, 10') for filtering wavelengths not useful to the plants, are interposed between the radiation and the plants, and the non-fresh water is caused to circulate on the said optical filter means in a uniform film whereby to recover heat energy absorbed by the said optical filter means and the thus-heated water is stored ; and by night, at least a part of the heated stored water is circulated in the interior of the greenhouse, said water partially vaporising in the interior of the greenhouse and heating it, the vaporised water condensing on a wall (2) of the greenhouse and at least a portion of the condensed water being collected in a fresh water reservoir (42).

2. Process according to Claim 1 characterized in that the optical filter means (10) are retracted during the night.

3. Process according to Claim 1 characterized in that by day there is provided in the interior of the greenhouse at least one localised surface (20', 180) which is cold relative to the rest of the greenhouse, whereby to promote on said surface or surfaces condensation of the vaporisable fraction of the liquid circulating on the optical filter means (10'), and the thus-condensed water is collected in the said fresh water reservoir (42).

4. Process according to Claim 3 characterized in that at least one localized cold surface is produced by passing the non-fresh water through at least one condensor (20') before passing it over the said optical filter means (10').

5. Apparatus for carrying out the process according to any one of Claims 1 to 4 for air-conditioning a greenhouse by day and night by non-fresh water and distillation of this water to provide fresh water, said greenhouse being limited by an external wall (2) and serving for the cultivation of plants (6) for which only certain wavelengths of solar radiation are useful, characterized in that it comprises :
— optical filter means (10, 10') capable of absorbing the non-useful wavelengths, and interposable between the said plants and the solar radiation ;
— means (18, 72, 186) for circulating by day a uniform film of non-fresh water on the said optical filter means, whereby to recover absorbed heat energy, and means (26, 54) for storing the heated water ;
— means (32, 72, 186) for circulating by night within the enclosed space at least one part of the heated water, one part of the circulated water condensing on a wall (2) in the said greenhouse, means (14, 54) for storing the water cooled by its circulation within the said greenhouse, and means (42) for collecting and storing condensed fresh water.

6. Apparatus according to Claim 6 characterized in that the means for circulating by day the water over the optical filter means comprise at least one condenser (20', 180) and means (94, 96, 188) for collecting by day water condensed on the said condenser or condensers.

7. Apparatus according to Claim 6 characterized in that the means for circulating by day the water over the optical filter means comprise, after the condenser or condensers (180), a pipe disposed above the optical filter means (10') and provided with outlets, said pipe having a cross section that provides a condensation surface (20') and means (94, 96) for collecting the thus condensed water.

8. Apparatus according to either of Claims 6 and 7 characterized in that the means for collecting condensed water by day comprise a gutter (94) fixed below the said pipe.

9. Apparatus according to Claim 5 characterized in that means (102, 104) are provided for retracting the said optical filter means (10).

10. Apparatus according to Claim 9 characterized in that the optical filter means comprise a plurality of optical filter elements (10) pivotable about an axis (x-x') between an active position by day and an inactive position by night, and, when they are in the active position, the optical filter elements partially mutually overlap and form a continuous surface substantially parallel to the external wall (2).

11. Apparatus according to any one of Claims 5 to 10, characterized in that each optical filter element (10) has on its surface facing the external wall (2) a network (100) of thin wire or formed in relief on the exterior surface of the said element.

12. Apparatus according to Claim 5 characterized in that the means for circulating by night the heated non-fresh water comprise open channels (34) arranged in the soil.

13. Apparatus according to Claim 7 characterized in that the means (54) for circulating by night the heated non-fresh water are identical with the means for circulating by day the cold non-fresh water, but provided with means (182, 184) to shut off the hot water from passing through the condenser (180).

**Ansprüche**

1. Verfahren zur Klimatisierung eines Tag- und Nacht-Gewächshauses durch nicht weiches Wasser und zur Destillation dieses nicht weichen Wassers, um weiches Wasser zu erhalten, wobei dieses Gewächshaus für eine Pflanzenkultur (6) bestimmt ist, für die nur bestimmte Wellenlängen der Sonnenstrahlung nützlich sind, dadurch gekennzeichnet, daß man am Tag zwischen der Strahlung und den Pflanzen optische Filtermittel (10, 10') für die Wellenlängen anordnet, die für die Pflanzen nicht nützlich sind, und daß man das nicht weiche Wasser über diese optischen Filtermittel in Form eines gleichmäßigen Films zirkulieren läßt, um die von den optischen Filtermitteln absorbierte Wärmeenergie zu sammeln, und daß man dieses « heiße » Wasser speichert, und daß man bei Nacht wenigstens einen Teil des gespeicherten heißen Wassers im Inneren des Gewächshauses zirkulieren läßt, wobei das Wasser teilweise im Inneren des Gewächshauses verdampft und dasselbe erwärmt, das verdampfte Wasser sich auf einer Wand (2) in diesem Gewächshaus kondensiert und daß man in einem Behälter (42) für weiches Wasser wenigstens einen Teil des kondensierten Wassers sammelt.

2. Verfahren nach Anspruch 1, dadurch gekennzeichnet, daß man bei Nacht die optischen Filtermittel (10) umgeht.

3. Verfahren nach Anspruch 1, dadurch gekennzeichnet, daß man bei Tag im Inneren des Gewächshauses wenigstens eine lokale Fläche (20', 180) erzeugt, die in bezug zu dem restlichen Teil des Gewächshauses kalt ist, um auf dieser Fläche oder diesen Flächen eine Kondensation des Teils des verdampfbaren Bestandteils der Flüssigkeit hervorzurufen, die auf diesen optischen Filtermitteln (10') zirkuliert und daß man das so kondensierte Wasser in dem Behälter (42) für weiches Wasser sammelt.

4. Verfahren nach Anspruch 3, dadurch gekennzeichnet, daß man bei Tag wenigstens eine lokale kalte Fläche dadurch erzeugt, daß man das nicht weiche Wasser in wenigstens einen Kondensator (20') leitet, bevor es auf die optischen Filtermittel (10') geleitet wird.

5. Anlage zur Durchführung des Verfahrens nach einem der vorhergehenden Ansprüche zur Klimatisierung eines Tag- und Nacht-Gewächshauses durch nicht weiches Wasser und zur Destillation dieses Wassers, um weiches Wasser zu erhalten, wobei dieses Gewächshaus durch eine Außenwand (2) begrenzt ist und zur Aufzucht von Pflanzen (6) dient, für die nur bestimmte Wellenlängen der Sonnenstrahlung nützlich sind, gekennzeichnet durch :

— optische Filtermittel (10, 10'), die fähig sind, Wellenlängen zu absorbieren, die nicht nützlich sind, und die zwischen den Pflanzen und der Sonnenstrahlung angeordnet werden können,

— Mittel (18, 72, 186), mittels denen ein regelmäßiger Film des weichen Wassers auf diesen optischen Filtermitteln gei Tag zirkuliert, um die absorbierte Wärmeenergie zu sammeln und Mittel (26, 54), um dieses « heiße » Wasser zu speichern,

— Mittel (32, 72, 186), mittels denen bei Nacht in diesem abgeschlossenen Raum wenigstens ein Teil dieses « heißen » Wassers zirkuliert, wobei sich ein Teil dieses Wassers bei der Zirkulation auf einer Wand (2) in dem Gewächshaus kondensiert, Mittel (14, 54), um das bei der Zirkulation in dem Gewächshaus abgekühlte Wasser zu speichern, und Mittel (42), um das weiche kondensierte Wasser zu sammeln und zu speichern.

6. Anlage nach Anspruch 5, dadurch gekennzeichnet, daß die Mittel zur Zirkulation des Wassers auf den optischen Filtermitteln bei Tag wenigstens einen Kondensator (20', 180) aufweisen und daß Mittel (94, 96, 188) vorgesehen sind, um das auf dem Kondensator oder den Kondensatoren kondensierte Wasser bei Tag zu sammeln.

7. Anlage nach Anspruch 6 dadurch gekennzeichnet, daß die Mittel zur Zirkulation des Wassers auf den optischen Filtermitteln bei Tag nach dem oder den Kondensatoren (180) eine Leitung aufweist, die über den optischen Filtermitteln (10') angeordnet und mit Verbindungsrohren versehen ist, und daß diese Leitung einen geraden Querschnitt in der Form hat, daß sie eine Kondensationsfläche (20') und die Mittel (94, 96) zum Sammeln des so kondensierten Wassers bildet.

8. Anlage nach einem der Ansprüche 6 und 7, dadurch gekennzeichnet, daß die Mittel zum Sammeln des kondensierten Wassers bei Tag von einer Rinne (94) gebildet werden, die unterhalb der Leitung befestigt ist.

9. Anlage nach Anspruch 5, dadurch gekennzeichnet, daß die Mittel (102, 104) vorgesehen sind, um die optischen Filtermittel (10) zu umgehen.

10. Anlage nach Anspruch 9, dadurch gekennzeichnet, daß die optischen Filtermittel von einer Vielzahl von optischen Filterelementen (10) gebildet werden, die um eine Achse (X-X') geschwenkt werden können, um eine für den Tag aktive Position und für die Nacht inaktive Position einzunehmen, wobei in der aktiven Position die optischen Filterelemente eine durchgehende Schicht (8) bilden, die im wesentlichen parallel zur Außenwand (2) ist und daß sie sich wenigstens teilweise wechselseitig überdecken.

11. Anlage nach einem der Ansprüche 5 bis 10, dadurch gekennzeichnet, daß jedes optische Filterelement auf seiner der Außenwand (2) zugewandten Fläche ein Netz (100) aus feinem Draht oder ein Relief auf der Außenwand dieses Elements trägt.

12. Anlage nach Anspruch 5, dadurch gekennzeichnet, daß die Mittel zur Zirkulation des nicht weichen (heißen) Wassers bei Nacht von offenen Kanälen (34) gebildet werden, die im Boden vorgesehen sind.

13. Anlage nach Anspruch 7, dadurch gekennzeichnet, daß die Mittel (54) zur Zirkulation des nicht weichen (heißen) Wassers bei Nacht mit den Mitteln zur Zirkulation des nicht weichen « kalten » Wassers bei Tag übereinstimmen, aber mit Mitteln (182, 184) versehen sind, die ein Durchleiten des « heißen » Wassers durch den Kondensator (1980) verhindern.

FIG. 1

FIG. 3

FIG. 2

FIG.5

FIG.4